# EUROPÄISCHE PATENTSCHRIFT

(11) **EP 1 428 608 B1**
(45) Veröffentlichungstag und Bekanntmachung des Hinweises auf die Patenterteilung: **05.04.2006**
(21) Anmeldenummer: 03027937.6
(22) Anmeldetag: 04.12.2003
(51) Int. Cl.: B23K 11/25, B21D 39/03

(54) **Verfahren zum Steuern einer Werkzeug-Anpresskraft bei Fügevorrichtungen und entsprechende Fügevorrichtung**
Method of controlling the pressing force of a tool of a joining device and such joining device
Procédé de contrôle de la force de pression d'un outil d'assemblage et dispositif d'assemblage correspondant

(30) Priorität: 11.12.2002 DE 10258059
(43) Veröffentlichungstag der Anmeldung: 16.06.2004
(73) Patentinhaber: NIMAK Automatisierte Schweisstechnik GmbH, 57537 Wissen (DE)
(72) Erfinder: Nickel, Paul Gerhard, 57537 Wissen (DE)
(74) Vertreter: Zapf, Christoph

(56) Entgegenhaltungen:
- EP-A- 0 566 741
- FR-A- 2 585 976
- US-A- 6 064 028

## Beschreibung

Die vorliegende Erfindung betrifft ein Verfahren zum Steuern einer Werkzeug-Anpreßkraft eines Arbeitswerkzeuges bei Fügevorrichtungen, wie Schweißzangen, Durchsetzfügevorrichtungen und dergleichen gemäβ dem Oberbegriffen der Ansprüche 1 und 2.
Des Weiteren betrifft die vorliegende Erfindung eine Fügevorrichtung gemäß dem Oberbegriff des Anspruchs 5.

Es ist bekannt, Werkstücke, insbesondere Bleche, miteinander thermisch und stoffschlüssig durch Punktschweißen zu verbinden. Dazu werden Schweißzangen verwendet, die jeweils als Arbeitswerkzeug eine Arbeitselektrode aufweisen, wobei die Bleche zwischen der Arbeitselektrode und einer Gegenelektrode verschweißt werden. Weiterhin sind auch andere (Punkt-) Fügeverfahren bekannt, wie beispielsweise das sogenannte Durchsetzfügen, wie es auch unter dem Begriff "Toxen" bekannt ist. Dabei sind ein Arbeitswerkzeug als Druckstempel und ein Gegenwerkzeug als Gegenstempel ausgebildet, zwischen denen Bleche mechanisch durch topfartige Prägepunkte form- oder kraftformschlüssig verbunden werden können.

Für eine spezielle Widerstandschweißmaschine ist der mechanische Aufbau aus der Druckschrift FR 2 585 976 bekannt. Dort wird die Annäherungsgeschwindigkeit und die Anpreßkraft einer beweglichen Elektrode über einen offenen (Steuerung) oder geschlossenen Regelkreis während des gesamten Fügevorgangs eingestellt.

In allen Fällen hängt die Qualität der Fügeverbindungen stark von der Anpreßkraft des jeweiligen Arbeitswerkzeugs (Elektrode, Stempel oder dergleichen) ab. In der Praxis hat sich gezeigt, dass unter wechselnden Betriebsbedingungen die Qualität der Fügeverbindungen stark variieren kann, so dass es später sogar zu Trennungen der Verbindungen kommen kann.

Der vorliegenden Erfindung liegt die Aufgabe zugrunde, ein Verfahren zum Steuern der Werkzeug-Anpreßkraft für Fügevorrichtungen der genannten Art anzugeben, mit dem stets und auch weitgehend unabhängig von wechselnden Betriebsbedingungen eine hohe Fügequalität und- sicherheit gewährleistet werden kann.

Erfindungsgemäß wird dies durch ein Verfahren gemäß Anspruch 1 oder Anspruch 2 und eine Fügevorrichtung gemäß dem Anspruch 5 erreicht, wobei ein elektrischer Antrieb verwendet wird, um einerseits das Arbeitswerkzeug über einen Arbeitshub gegen ein Werkstück zu bewegen und andererseits auch anschließend bei Werkstück-Kontakt mit der Anpreßkraft zu beaufschlagen. Dabei werden in einer ersten Variante der Erfindung zum Steuern der Anpreßkraft folgende Schritte durchgeführt:

Einleitend wird zunächst einmalig eine gewünschte Soll-Anpreßkraft des Arbeitswerkzeugs festgelegt, und es wird mit geeigneten Mitteln ein dazu erforderlicher Arbeitsstrom für den elektrischen Antrieb ermittelt. Etwa zeitgleich dazu, also unmittelbar zeitlich davor oder danach - und dadurch praktisch bei den gleichen Betriebsbedingungen - wird ein bestimmter Fahrstrom des elektrischen Antriebs für eine einmal festgelegte, eigentlich beliebige, aber konstante Fahrgeschwindigkeit für die Hubbewegung, insbesondere für den eigentlichen Arbeitshub, ermittelt. Nachfolgend wird bei späteren Hubbewegungen, insbesondere in jedem späteren Arbeitshub, die tatsächliche Fahrgeschwindigkeit überwacht und erforderlichenfalls, wenn die Ist-Geschwindigkeit von der zuvor ermittelten konstanten Fahrgeschwindigkeit abweicht, durch eine entsprechende Änderung des Fahrstroms wieder auf die konstante Fahrgeschwindigkeit gebracht, d. h. die Fahrgeschwindigkeit wird durch Anpassung des Fahrstromes konstant gehalten, wobei die dazu erforderliche Stromänderung ermittelt wird. Wenn dann anschließend das Arbeitswerkzeug zum Anlagekontakt am jeweiligen Werkstück kommt, so wird in Abhängigkeit von der zuvor ermittelten Stromänderung auch der Arbeitsstrom in einem entsprechenden Verhältnis geändert, wodurch dann die daraus resultierende Anpreßkraft dem Soll-Wert entspricht.

Die Erfindung beruht somit auf der Erkenntnis, dass verschiedene Betriebsbedingungen, wie z. B. unterschiedliche Temperaturen, Verschmutzungen insbesondere in Lagerbereichen, schwerkraft- und raumlageabhängige Belastungen u.s.w., auch zu unterschiedlichen Fahrgeschwindigkeiten während der Hubbewegungen sowie dann aber auch zu entsprechenden Abweichungen der Anpreßkraft vom gewünschten optimalen Soll-Wert führen. Beispielsweise führen unterschiedliche Umgebungstemperaturen zur Änderungen von Reibwerten im System und zu Viskositätsänderungen von Schmiermitteln, was sich dann insgesamt durch unterschiedliche Fahrgeschwindigkeiten bemerkbar macht. Die Hubbewegung insbesondere im eigentlichen Arbeitshub wird daher erfindungsgemäß als "Meßfahrt" genutzt, um anhand einer sich ändemden Geschwindigkeit alle dafür maßgeblichen Einflüsse zu erfassen und dann zu kompensieren.

Eine entsprechende Messfahrt kann jedoch auch außerhalb des eigentlichen Arbeitshubes durch eine zusätzliche (spezielle) Hubbewegung durchgeführt werden. Zudem kann eine Anpassung der Anpresskraft an veränderte Bedingungen auch in zeitlich festgelegten Intervallen (z. B. nach jedem neuen Werkstück) jeweils durch eine spezielle Messfahrt durchgeführt werden.

Die erfindungsgemäße Kraftsteuerung erfolgt somit bei einer ersten Ausführungsart der Erfindung (Anspruch 1) durch Konstanthalten der Fahrgeschwindigkeit und Ermittlung einer dafür notwendigen Stromänderung, wobei dann im Verhältnis der Fahrstromänderung auch der Arbeitsstrom geändert wird.

In einer Ausführungsvariante der Erfindung kann auch bei jeder Hubbewegung der Fahrstrom konstant auf einem ursprünglich festgelegten, während der ersten "Referenzfahrt" einer bestimmten Fahrgeschwindigkeit entsprechenden Wert gehalten werden, wobei während jeder späteren, als Meßfahrt genutzten Hubbewegung eine gegenüber der zuvor bestimmten Fahrgeschwindigkeit auftretende Geschwindigkeitsänderung als Maß für die anschließende Anpassung des Arbeitsstroms ausgewertet wird (Anspruch 2).

In allen Fällen kann zweckmäßigerweise die Fahrgeschwindigkeit indirekt über eine Drehzahlmessung des elektrischen Antriebs ermittelt werden.

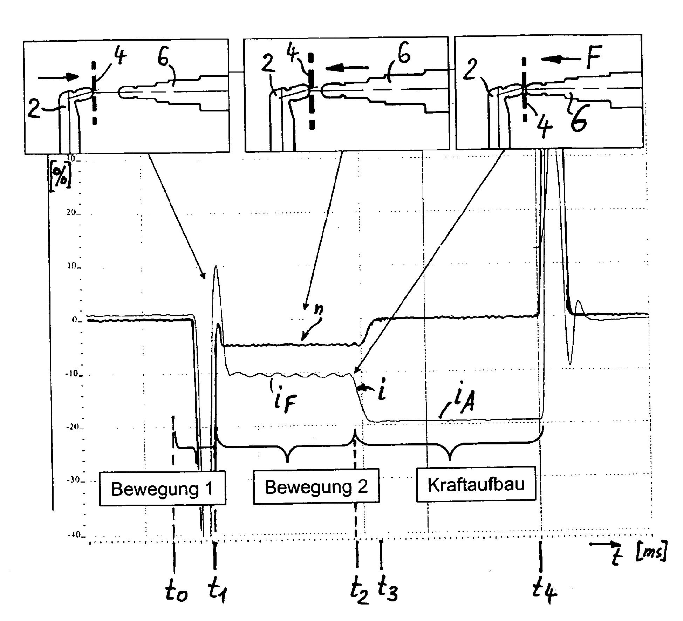

Anhand der Zeichnung soll die Erfindung beispielhaft noch genauer erläutert werden. Die einzige Zeichnungsfigur zeigt ein Diagramm mit Darstellung des zeitlichen Verlaufs bestimmter Größen bei Anwendung des erfindungsgemäßen Verfahrens am Beispiels einer Punktschweißvorrichtung (Schweißzange), von der zusätzlich die wesentlichen Teile (Elektroden) in verschiedenen Arbeitsphasen veranschaulicht sind.

In einer ersten Arbeitsphase, dem sogenannten Ausgleichshub (Bewegung 1 zwischen Zeitpunkt t₀ und t₁) wird eine Gegenelektrode 2 von einer Rückseite gegen ein lediglich angedeutetes Werkstück 4 (in der Regel zwei zu verbindende Bleche) bewegt. Zeitgleich beginnt auf der gegenüberliegenden Vorderseite die Bewegung einer Arbeitselektrode 6 über einen Arbeitshub gegen das Werkstück 4 (siehe Bewegung 2 von t₁ bis t₂), und dann erfolgt ab dem Zeitpunkt t₂ bei Elektroden-Anlage (Geschwindigkeit der Elektrode 6 relativ zum Werkstück 4 = Null, relativ zu Zangenarmen der Schweißzange wegen Durchbiegen der Arme aber erst noch bis zum Zeitpunkt t₃ bis auf Null abnehmend) ein Kraftaufbau, um den Füge- bzw. Schweißvorgang bis t₄ unter einer bestimmten Anpreßkraft F durchzuführen. Die Anpreßkraft F ist für die Qualität der Verbindung entscheidend. Durch die Erfindung wird deshalb die Anpreßkraft F selbsttätig für jeden Fügevorgang auf einen vorgegebenen optimalen Wert gesteuert.

Zum Antrieb zumindest der Arbeitselektrode 6 wird erfindungsgemäß ein elektrischer Antrieb verwendet, so dass ein elektrischer Strom i als Meßgröße genutzt werden kann. So kann für eine einmal festgelegte, optimale Anpreßkraft F ein bestimmter Arbeitsstrom i_{A} ermittelt werden. Etwa zeitgleich, d. h. unmittelbar danach oder auch davor, also praktisch unter den selben Betriebsbedingungen, wird für die Hubbewegung der Arbeitselektrode 6 bei einer eigentlich beliebigen, aber konstanten Fahrgeschwindigkeit der zugehörige Fahrstrom i_{F} ermittelt. Als Maß für die Fahrgeschwindigkeit kann eine Drehzahl n des Antriebs erfaßt werden. Es kann dann vorzugsweise in jedem späteren Arbeitshub (Bewegung 2) eine von den Betriebsbedingungen abhängige Änderung einer Systemgröße festgestellt werden, um dann entsprechend dem Verhältnis dieser Größenänderung für die jeweilige Arbeitsphase auch den für die Anpreßkraft F maßgeblichen Arbeitsstrom i_{A} anzupassen. Dazu kann wahlweise entweder die Fahrgeschwindigkeit bzw. Drehzahl n durch eine bestimmte Änderung des Stromes i_{F} konstant gehalten und die Anpassung des Arbeitsstroms i_{A} anhand der Stromänderung vorgenommen werden, oder es kann bei konstantem Fahrstrom i_{F} eine Änderung der Geschwindigkeit n als Maß für die erforderliche Änderung von i_{A} ausgewertet werden.

Als elektrischer Antrieb kann ein Elektro-Linearmotor verwendet werden. Es kann sich um einen Elektro-Rotationsmotor mit nachgeschalteten Antriebsmitteln handeln, die die Rotationsbewegung des Motors in eine lineare Antriebsbewegung für die Elektrode 6 umsetzen. Als Antriebsmittel ist beispielsweise ein Spindeltrieb (Kugelspindel) geeignet.

Durch die Erfindung können auf sehr einfache, aber wirkungsvolle Weise zumindest die folgenden Einflußgrößen kompensiert werden:
- Viskosität des Schmierstoffes in Abhängigkeit von Temperatur und Alterung
- Reibwert der Antriebsmittel bei unterschiedlichen Temperaturen
- mechanische Wirkungsgradänderung in Abhängigkeit von der Hubanzahl
- Führungen und Lagerungen der Antriebsmittel in Abhängigkeit von den Hubanzahlen
- Führungen und Lagerungen der Vorrichtung in Abhängigkeit von Hubzahlen, Verschmutzungen und Temperatur
- weitere mechanische Größen, die sich durch Temperatur und/oder Hubzahlen verändern
- externe Einflüsse, insbesondere Schwerkrafteinfluß, durch unterschiedliche Lage und Gewichtsänderungen der Fügevorrichtung (insbesondere bei großen Schweißzangen, vor allem sogenannten X-Zangen mit entsprechend schweren Armen).

Die Erfindung ist nicht auf die konkret beschriebenen Varianten und Anwendungsbeispiele beschränkt, sondern umfaßt die durch die Ansprüche definierten Ausführungen und Anwendungen.

## Patentansprüche

1. Verfahren zum Steuern einer Werkzeug-Anpreßkraft (F) eines Arbeitswerkzeuges (6) bei Fügevorrichtungen, wie Schweißzangen, Durchsetzfügevorrichtungen und dergleichen, wobei
das Arbeitswerkzeug (6) mittels eines elektrischen Antriebes über einen Arbeitshub gegen ein Werkstück bewegt und anschließend bei Werkstück-Kontakt mit der Anpreßkraft (F) beaufschlagt wird, **dadurch gekennzeichnet, dass** zum Steuern der Anpreßkraft (F) folgende Schritte durchgeführt werden:
a) Festlegung einer Soll-Anpreßkraft (F) und Ermittlung eines dazu erforderlichen Arbeitsstromes (i_{A}) für den elektrischen Antrieb sowie
b) Festlegung einer beliebigen Soll-Fahrgeschwindigkeit für die Hubbewegung des Arbeitswerkzeugs (6) und Ermittlung eines zugehörigen Fahrstromes (i_{F}) für den elektrischen Antrieb,
c) bei späteren Hubbewegungen, insbesondere in jedem weiteren Arbeitshub, Vergleich der tatsächlichen Fahrgeschwindigkeit mit der Soll-Fahrgeschwindigkeit und erforderlichenfalls Anpassung auf die Soll-Fahrgeschwindigkeit durch entsprechende Änderung des Fahrstromes (i_{F}) und
d) bei Werkstück-Kontakt Anpassung des Arbeitsstromes (i_{A}) in Abhängigkeit von der Änderung des Fahrstromes (i_{F}).

2. Verfahren zum Steuern einer Werkzeug-Anpreßkraft (F) eines Arbeitswerkzeuges (6) bei Fügevorrichtungen, wie Schweißzangen, Durchsetzfügevorrichtungen und dergleichen, wobei
das Arbeitswerkzeug (6) mittels eines elektrischen Antriebes über einen Arbeitshub gegen ein Werkstück bewegt und anschließend bei Werkstück-Kontakt mit der Anpreßkraft (F) beaufschlagt wird, **dadurch gekennzeichnet, dass** zum Steuern der Anpreßkraft (F) folgende Schritte durchgeführt werden:
a) Festlegung einer Soll-Anpreßkraft (F) und Ermittlung eines dazu erforderlichen Arbeitsstromes (i_{A}) für den elektrischen Antrieb sowie
b) Festlegung eines bestimmten, konstanten Fahrstromes (i_{F}) für den elektrischen Antrieb bei einer beliebigen Fahrgeschwindigkeit für die Hubbewegung,
c) bei späteren Hubbewegungen, insbesondere in jedem weiteren Arbeitshub, Messung der tatsächlichen Fahrgeschwindigkeit bei dem konstanten Fahrstrom (i_{F}) und Ermittlung einer eventuellen Geschwindigkeitsänderung und
d) bei Werkstück-Kontakt Anpassung des Arbeitsstromes (i_{A}) in Abhängigkeit von der ermittelten Geschwindigkeitsänderung.

3. Verfahren nach Anspruch 1 oder 2,
**dadurch gekennzeichnet, dass** der Arbeitsstrom (i_{A}) proportional dem Verhältnis der ermittelten Änderung des Fahrstromes (i_{F}) bzw. der Geschwindigkeit geändert wird.

4. Verfahren nach einem der Ansprüche 1 bis 3,
**dadurch gekennzeichnet, dass** die Fahrgeschwindigkeit indirekt über eine Messung der Drehzahl (n) des elektrischen Antriebs ermittelt wird.

5. Fügevorrichtung zum Herstellen von Fügeverbindungen bei Werkstücken, insbesondere Schweißzange, Durchsetzfügevorrichtung oder dergleichen, mit einem Arbeitswerkzeug (6) und einem Gegenwerkzeug (2), wobei das Arbeitswerkzeug (6) über einen Arbeitshub in Richtung des Gegenwerkzeugs (2) und gegen ein Werkstück (4) bewegbar und bei Werkstückkontakt mit einer Anpresskraft (F) beaufschlagbar ist, wobei zum Antrieb des Arbeitswerkzeuges (6) und zum Beaufschlagen mit der Anpresskraft (F) ein elektrischer Antrieb vorgesehen ist,
**gekennzeichnet durch** eine Einrichtung zum Messen der Fahrgeschwindigkeit des Arbeitswerkzeuges (6) während der Hubbewegung, eine Einrichtung zum Messen des elektrischen Stroms (i) des elektrischen Antriebs, Speichermittel zum Speichern von Änderungen des Stroms (i) gegenüber einem zu einer beliebig festgelegten Soll-Fahrgeschwindigkeit der Hubbewegung gehörigen Fahrstrom (i_{F}) und/oder zum Speichem von Änderungen der Geschwindigkeit (n) der Hubbewegung gegenüber einer, einem festgelegten, konstanten Fahrstrom zugehörigen Fahrgeschwindigkeit sowie **durch** eine Auswerteeinheit zur Anpassung des Arbeitsstromes (i_{A}) in Abhängigkeit von den gespeicherten Änderungen.

6. Fügevorrichtung nach Anspruch 5,
**dadurch gekennzeichnet, dass** zum indirekten Messen der Fahrgeschwindigkeit des Arbeitswerkzeugs (6) Mittel zum Messen der Drehzahl (n) des elektrischen Antriebes vorgesehen sind.

7. Fügevorrichtung nach Anspruch 5 oder 6,
**gekennzeichnet durch** Mittel zum Messen der Anpreßkraft (F) des Arbeitswerkzeugs (6) und zum Ermitteln eines zugehörigen Arbeitsstromes (i_{A}).

## Claims

1. A process for controlling a tool pressure force (F) of an operating tool (6) in joining devices, such as welding tongs, clinching devices and the like, in which an electric drive moves the operating tool (6) against a workpiece by way of a drive stroke and, with workpiece contact, the operating tool is then acted upon by the pressure force (F), **characterised in that** the following steps are carried out for controlling the pressure force (F):
a) specifying a set pressure force (F) and determining the necessary operating current (i_{A}) for this for the electric drive; and
b) specifying any set travelling speed for the stroke movement of the operating tool (6) and determining an associated traction current (i_{F}) for the electric drive;
c) for later stroke movements, particularly in each further operating stroke, comparing the actual travelling speed with the set travelling speed and carrying out the necessary adaptation to the set travelling speed by altering the traction current (i_{F}) accordingly; and
d) with workpiece contact, adapting the operating current (i_{A}) according to the change in the traction current (i_{F}).

2. A process for controlling a tool pressure force (F) of an operating tool (6) in joining devices such as welding tongs, clinching devices and the like, in which an electric drive moves the operating tool (6) against a workpiece by way of a drive stroke and, with workpiece contact, the operating tool is then acted upon by the pressure force (F), **characterised in that** the following steps are carried out for controlling the pressure force (F):
a) specifying a set pressure force (F) and determining the necessary operating current (i_{A}) for this for the electric drive; and
b) specifying a particular constant traction current (i_{F}) for the electric drive with any travelling speed of the stroke movement;
c) in later stroke movements, particularly in each further operating stroke, measuring the actual travelling speed for the constant traction current (i_{F}) and determining a possible change in speed; and
d) with workpiece contact, adapting the operating current (i_{A}) according to the determined change in the traction current (i_{F}) .

3. A process according to Claim 1 or 2, **characterised in that** the operating current (i_{A}) is altered proportionally to the ratio of the determined change in the traction current (i_{F}) or speed.

4. A process according to one of Claims 1 to 3, **characterised in that** the travelling speed is determined indirectly by measuring the speed (n) of the electric drive.

5. A joining device for producing join connections in workpieces, particularly welding tongs, a clinching device or the like, having an operating tool (6) and a counter tool (2), in which the operating tool (6) is movable in the direction of the counter tool (2) and against a workpiece (4) by way of an operating stroke and, with workpiece contact, can be acted upon by a pressure force (F), an electric drive being provided for driving the operating tool (6) and applying the pressure force (F), **characterised by** a device for measuring the travelling speed of the operating tool (6) during the stroke movement, a device for measuring the electrical current (i) of the electric drive, storage means for storing changes in the current (i) with respect to a traction current (i_{F}) associated with any specified set travelling speed of the stroke movement and/or for storing changes in the speed (n) of the stroke movement with respect to a travelling speed associated with a specified, constant traction current and by an evaluating unit for adapting the operating current (i_{A}) according to the stored changes.

6. A joining device according to Claim 5, **characterised in that**, for the indirect measurement of the travelling speed of the operating tool (6), means are provided for measuring the speed (n) of the electric drive.

7. A joining device according to Claim 5 or 6, **characterised by** means for measuring the pressure force (F) of the operating tool (6) and for determining an associated operating current (i_{A}) .

## Revendications

1. Procédé de contrôle de la force de pression (F) d'un outil de travail (6) dans des dispositifs d'assemblage tels des pinces à souder, des dispositifs d'assemblage au passage et similaires, dans lequel l'outil de travail (6) est déplacé au moyen d'un entraînement électrique selon une course de travail contre une pièce ouvrée et ensuite, lors du contact avec la pièce ouvrée, est soumis à la force d'application (F), **caractérisé en ce que**, pour la commande de la force d'application (F), les étapes suivantes sont effectuées :
a) une définition d'une force d'application (F) de consigne et la détermination d'un courant de travail nécessaire (I_{A}) pour l'entraînement électrique, ainsi que
b) une définition d'une vitesse de déplacement de consigne quelconque pour le mouvement d'approche de l'outil de travail (6) et la détermination d'un courant de déplacement correspondant (I_{F}) pour l'entraînement électrique,
c) lors de mouvements d'approche ultérieurs, en particulier dans chaque approche de travail suivante, une comparaison de la vitesse de déplacement réelle à la vitesse de déplacement de consigne et, le cas échéant, une adaptation à la vitesse de déplacement de consigne par modification adéquate du courant de déplacement (I_{F}) et
d) lors du contact avec la pièce ouvrée, une adaptation du courant de travail (I_{A}) en fonction de la variation du courant de déplacement (I_{F}).

2. Procédé de commande de la force d'application (F) d'un outil de travail (6) dans des dispositifs d'assemblage tels des pinces à souder, des dispositifs d'assemblage au passage et similaires, sachant que l'outil de travail (6) est déplacé au moyen d'un entraînement électrique selon une course de travail contre une pièce ouvrée et ensuite, lors du contact avec la pièce ouvrée, est soumis à la force d'application (F), **caractérisé en ce que**, pour la commande de la force d'application (F), les étapes suivantes sont effectuées :
a) une définition d'une force d'application (F) de consigne et la détermination d'un courant de travail nécessaire (I_{A}) pour l'entraînement électrique, ainsi que
b) une définition d'un courant de déplacement (I_{F}) déterminé constant pour l'entraînement électrique pour une vitesse de déplacement quelconque du mouvement d'approche,
c) lors de mouvements d'approche ultérieurs, en particulier dans chaque course de travail suivante, une mesure de la vitesse de déplacement réelle pour le courant de déplacement (I_{F}) constant et la détermination d'un éventuel changement de la vitesse et
d) lors du contact avec la pièce ouvrée, une adaptation du courant de travail (I_{A}) en fonction du changement de vitesse déterminé.

3. Procédé selon la revendication 1 ou 2,
**caractérisé en ce que** le courant de travail (I_{A}) est modifié proportionnellement au rapport de la modification déterminée du courant de déplacement (I_{F}), respectivement de la vitesse.

4. Procédé selon l'une des revendications 1 à 3,
**caractérisé en ce que** la vitesse de déplacement est déterminée indirectement par une mesure de la vitesse de rotation (n) de l'entraînement électrique.

5. Dispositif d'assemblage pour la fabrication de liaisons assemblées sur des pièces ouvrées, en particulier pinces à souder, dispositifs d'assemblage au passage et similaires, avec un outil de travail (6) et une contre-outil (2), dans lequel l'outil de travail (6) peut être déplacé selon une course de travail en direction du contre-outil (2) et contre une pièce ouvrée (4) et que, lors du contact avec la pièce ouvrée, il peut être soumis à une force d'application (F), sachant que, pour l'entraînement de l'outil de travail (6) et pour l'exercice de la force d'application (F), un entraînement électrique est prévu,
**caractérisé par** un dispositif pour la mesure de la vitesse de déplacement de l'outil de travail (6) pendant le mouvement d'approche, par un dispositif pour la mesure du courant électrique (I) de l'entraînement électrique, par des moyens de mémorisation pour la mémorisation de la variation du courant (I) par rapport à un courant de déplacement (I_{F}) correspondant à une vitesse de déplacement de consigne du mouvement d'approche, définie de façon quelconque, et/ou pour la mémorisation de modifications de la vitesse (n) du mouvement d'approche par rapport à une vitesse de déplacement correspondant à un courant de déplacement défini constant, ainsi que par une unité de dépouillement pour l'adaptation du courant de travail (I_{A}) en fonction des modifications mémorisées.

6. Dispositif d'assemblage selon la revendication 5,
**caractérisé en ce que**, pour la mesure indirecte de la vitesse de déplacement de l'outil de travail (6), il est prévu des moyens de mesure de la vitesse de rotation (n) de l'entraînement électrique.

7. Dispositif d'assemblage selon la revendication 5 ou 6,
**caractérisé par** des moyens de mesure de la force d'application (F) de l'outil de travail (6) et des moyens de détermination d'un courant de travail (I_{A}) correspondant.
